# EUROPEAN PATENT APPLICATION

(11) **EP 3 139 466 A1**
(43) Date of publication of application: **08.03.2017**
(21) Application number: 15465536.9
(22) Date of filing: 07.09.2015
(51) Int. Cl.: H02J 50/12, B60L 11/18, H02J 50/50

(54) **POWER CONVERSION MODULE FOR INDUCTIVE CHARGING FOR VEHICLES AND METHOD FOR OPERATING A POWER CONVERSION MODULE**

(71) Applicant: Continental Automotive GmbH, 30165 Hannover (DE)
(72) Inventor: Craciun, Serban, 325400 Caransebes (RO)

(57) **Abstract**

The present invention relates to a power conversion module (100) for inductive charging for vehicles, the power conversion module (100) comprising: a primary coil (Lₚ₁, Lₚ₂, ..., L_{pN}), which is configured to convert electrical energy into magnetic energy; and a power switch (S_{w1}, S_{w2}, ..., S_{wN}), which is coupled to the primary coil (Lₚ₁, Lₚ₂, ..., L_{pN}) in parallel and which is configured to activate the primary coil (Lₚ₁, Lₚ₂, ..., L_{pN}) by an open switch state and to deactivate the primary coil (Lₚ₁, Lₚ₂, ..., L_{pN}) by a closed switch state.

## Description

The present invention relates to the field of inductive charging or wireless charging. In particular, the present invention relates to a power conversion module for inductive charging for vehicles, a wireless power charger, and a method for operating a power conversion module.

Multi-coil solutions for wireless power charger or wireless power transmitter comprise a power conversion unit and a control and communication. The power conversion unit may comprise a set of primary coils, a multiplexer for the primary coils, a power inverter, and a current sense circuit.

Conventional multiplexers comprise an electronic switch connected in series with each primary coil coupled to the multiplexer.

By activating a specific switch assigned to the primary coil it can be chosen which primary coil will be energized by the power inverter.

For automotive versions of a wireless power charger, only one primary coil, which may comprise the best coupling factor with the secondary coil or receiving coil, is energized by the power converter. The other remaining primary coils will remain disconnected from the circuit.

There may a need to improve inductive charging or wireless charging devices. These needs are met by the subject-matter of the independent claims. Further exemplary embodiments are evident from the dependent claims and the following description.

An aspect of the present invention relates to a power conversion module for inductive charging for vehicles, the power conversion module comprising: a primary coil, which is configured to convert electrical energy into magnetic energy; and a power switch, which is coupled to the primary coil in parallel and which is configured to activate the primary coil by an open switch state and to deactivate the primary coil by a closed switch state.

In other words, the present invention advantageously provides to replace the series circuit configuration of the (power) switches regarding the primary coils with a parallel circuit configuration of the (power) switches and the primary coils.

In other words, the power switches are connected in parallel to the primary coils. In this configuration, each primary coil will have a parallel connection to one power switch assigned to the primary coil and used for de-activating and activating the primary coil.

In particular, the power switch will be in short circuit for each primary coil which shall not be energized by the power inverter. Only the power switch corresponding to a primary coil which has to be energized will be left open and the other primary coils will be short circuit by the assigned or corresponding power switches.

The present invention advantageously provides a better quality factor of the resonance circuit since no power switch or other elements with a specific conduction resistance are placed in series with the primary coil.

The present invention further improves the efficiency of the energy transfer. The present invention further advantageously provides an improved foreign object detection mechanism, as the quality factor of the coupling of primary and secondary coils is improved, thereby allowing an improved detection and/or localization of the secondary coil of the device to be charged.

The present invention can be advantageously applied to all wireless power chargers that use primary coils and a multiplexer circuit.

According to a further, second aspect of the present invention, a wireless power charger is provided, the wireless power charger comprising a voltage source which is configured to provide an input voltage, a control module, and a power conversion module according to the first aspect of the present invention or according to any implementation form of the first aspect of the present invention.

According to a further, third aspect of the present invention, a method for operating a power conversion module is provided, the method comprising the steps of activating a primary coil by an open switch state of a power switch, which is coupled to the primary coil in parallel; and deactivating the primary coil by a closed switch state of the power switch.

According to an exemplary embodiment of the present invention, the power conversion module comprises at least one further primary coil, which is configured to convert electrical energy into magnetic energy and at least one further power switch, which is coupled to the further primary coil in parallel and which is configured to activate the further primary coil by an open switch state and to deactivate the further primary coil by a closed switch state. This advantageously provides a reliable selection of the primary coil to be used to transfer energy to a secondary coil, choosing a primary coil which has the best coupling factor with the secondary coil.

According to an exemplary embodiment of the present invention, the power conversion module comprises a multiplexer which is configured to control the power switch and to control the at least one further power switch and which is configured to serve as a selection circuit for selecting the primary coil and/or the at least one further primary coil for wireless energy transmission. This advantageously allows improving the efficiency of the inductive coupling of an electrical device to the power conversion module for energy transfer. In other words, the primary coils are used for inductive charging or wireless charging.

According to an exemplary embodiment of the present invention, the power conversion module comprises an array of primary coils, the array comprising the primary coil and the at least one further primary coil. The array may be a 2x1 array comprising two or more primary coils.

The array may be formed to cover an area with primary coils. This advantageously allows covering an increased area for inductive charging, using the magnetic or electromagnetic field of the primary coil to transfer energy to a secondary coil of a device to be charged.

According to an exemplary embodiment of the present invention, the power conversion module comprises an EMC-filter circuit comprising a filter capacitor and at least one inductor. EMC is the abbreviation for electromagnetic compatibility. The EMC-filter may be configured to reduce electromagnetic interference. The EMC-filter may improve the correct operation of the device or of the wireless power charger.

Thereby, unwanted electromagnetic emission of the device or of the wireless power charger may be reduced. Further electromagnetic disturbances may be reduced.

According to an exemplary embodiment of the present invention, the power conversion module comprises a filter capacitor, which is coupled in series to the primary coil or in series to the at least one further primary coil and which is assigned to the power switch or to the least one further power switch and which is coupled in parallel to the capacitor of the EMC-filter circuit if the power switch assigned to the filter capacitor is in closed switch state.

This advantageously allows reducing the needed or necessary capacitance values of the capacitors of the power conversion module, as deactivated or non-operating primary coils are bypassed and by this bypassing, the assigned filter capacitors are connected in parallel to the capacitor of the EMC-filter circuit thereby reducing the necessary capacitance values of the capacitors.

This advantageously allows providing a cost reduction of the power conversion module.

According to an exemplary embodiment of the present invention, the power conversion module comprises a power inverter circuit, which is configured to convert a DC input voltage into an AC supply voltage.

According to an exemplary embodiment of the present invention, the power switch and/or the least one further power switch is a metal-oxide-semiconductor field-effect transistor.

According to an exemplary embodiment of the present invention, the metal-oxide-semiconductor field-effect transistor is a depletion-mode metal-oxide-semiconductor field-effect transistor.

These and other aspects of the present invention will become apparent from and will be elucidated with reference to the embodiments described hereinafter.

Exemplary embodiments of the present invention will be described in the following with reference to the following drawings: A more complete appreciation of the present invention and the intended advantages thereof will be more clearly understood by reference to the following schematic drawings, which are not to scale, wherein:
- Fig. 1: shows a schematic diagram of a wireless power charger according to an exemplary embodiment of the present invention;
- Fig. 2: shows a schematic diagram of a wireless power charger according to an exemplary embodiment of the present invention;
- Fig. 3: shows a schematic diagram of a wireless power charger for explaining the present invention; and
- Fig. 4: shows a schematic diagram of a flow-chart diagram of a method for operating a power conversion module according to an exemplary embodiment of the present invention.

The illustration in the drawings is purely schematic and does not intend to provide scaling relations or size information. In different drawings or figures, similar or identical elements are provided with the same reference numerals.

Generally, identical parts, units, entities or steps are provided with the same reference symbols in the description.

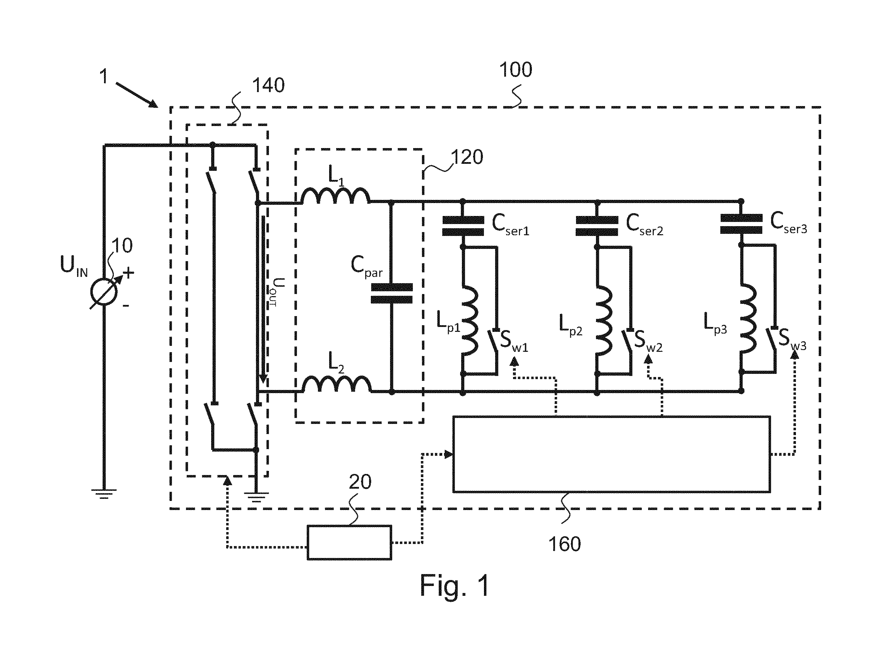

Fig. 1 shows a schematic diagram of a power charger according to an exemplary embodiment of the present invention.

A wireless power charger 1 may comprise a voltage source 10, a control module 20, and a power conversion module 100. The voltage source 10 is configured to provide an input voltage U_{IN}. The power conversion module 100 may comprise a primary coil Lₚ₁, Lₚ₂, ..., L_{pN} and a power switch S_{w1}, S_{w2}, ..., S_{wN}. The primary coil Lₚ₁, Lₚ₂, ..., L_{pN} is configured to convert electrical energy into magnetic energy.

The control module 20 may be configured to control the multiplexer 160 and/or the power inverter circuit 140.

The provided magnetic energy can then reconverted by a secondary coil of an energy harvesting device, not shown in Fig. 1.

According to an exemplary embodiment of the present invention, the power switch S_{w1}, S_{w2}, ..., S_{wN} is coupled to the primary coil Lₚ₁, Lₚ₂, ..., L_{pN} in parallel and is configured to activate the primary coil Lₚ₁, Lₚ₂, ..., L_{pN} by an open switch state and to deactivate the primary coil Lₚ₁, Lₚ₂, ..., L_{pN} by a closed switch state.

According to an exemplary embodiment of the present invention, the power conversion module 100 comprises a multiplexer 160 which is configured to control the power switches S_{w1}, S_{w2}, ..., S_{wN} and which is configured to serve as a selection circuit for selecting a primary coil Lₚ₁, Lₚ₂, ..., L_{pN} for wireless energy transmission.

According to an exemplary embodiment of the present invention, the power conversion module 100 comprises an array of primary coils Lₚ₁, Lₚ₂, ..., L_{pN}, the array comprising the primary coil Lₚ₁, Lₚ₂, ..., L_{pN} and the at least one further primary coil Lₚ₁, Lₚ₂, ..., L_{pN}. In Fig. 1, three primary coils Lₚ₁, Lₚ₂, Lₚ₃ are shown.

According to an exemplary embodiment of the present invention, the power conversion module 100 comprises an EMC-filter circuit 120 comprising a capacitor Cₚₐᵣ and at least one inductor L₁, L₂. In Fig. 1, the EMC-filter circuit 120 comprises two inductors L₁, L₂

According to an exemplary embodiment of the present invention, the power conversion module 100 comprises a filter capacitor Cₛₑᵣ₁, Cₛₑᵣ₂, ..., C_{serN} which is coupled in series to the primary coil Lₚ₁, Lₚ₂, ..., L_{pN} or in series to the at least one further primary coil Lₚ₁, Lₚ₂, ..., , L_{pN} and which is assigned to the power switch S_{w1}, S_{w2}, ..., S_{wN} or to the least one further power switch S_{w2}, ..., S_{wN} and which is coupled in parallel to the capacitor Cₚₐᵣ of the EMC-filter circuit 120 if the power switch S_{w1}, S_{w2}, ..., S_{wN} assigned to the filter capacitor Cₛₑᵣ₁, Cₛₑᵣ₂, ..., C_{serN} is in closed switch state.

According to an exemplary embodiment of the present invention, the power conversion module 100 comprises a power inverter circuit 140, which is configured to convert an input voltage U_{IN} into a supply voltage D_{OUT}.

The inductors L₁, L₂ of the EMC-filter circuit 120 may for instance have an inductance between 0,1 and 500 pH or preferably between 0,5 and 3 µH, or most preferably for instance 1 µH.

The primary coils Lₚ₁, Lₚ₂, Lₚ₃ may for instance have an inductance between 0,5 and 1500 µH, preferably between 1 and 50 µH, or most preferably for instance 24 µH.

The filter capacitors Cₛₑᵣ₁, Cₛₑᵣ₂, Cₛₑᵣ₃ may for instance have a capacitance between 2 and 2500 nF, or preferably between 50 and 500 nF, or most preferably for instance 100 nF.

The capacitor Cₚₐᵣ of the EMC-filter circuit 120 may for instance have a capacitance between 5 nF and 2500 nF, preferably between 50 nF and 500 nF, or most preferably for instance 200 nF.

In this example, the required capacitance for the EMC filter is 400 nF, i.e. 2*100 nF from the bypassed filter capacitors Cₛₑᵣ₂, Cₛₑᵣ₃ and 200 nF from the capacitor Cₚₐᵣ of the EMC-filter circuit 120.

Typical values for the input voltage U_{IN} may range from 1 to 10 V DC depending of the required transmitted power.

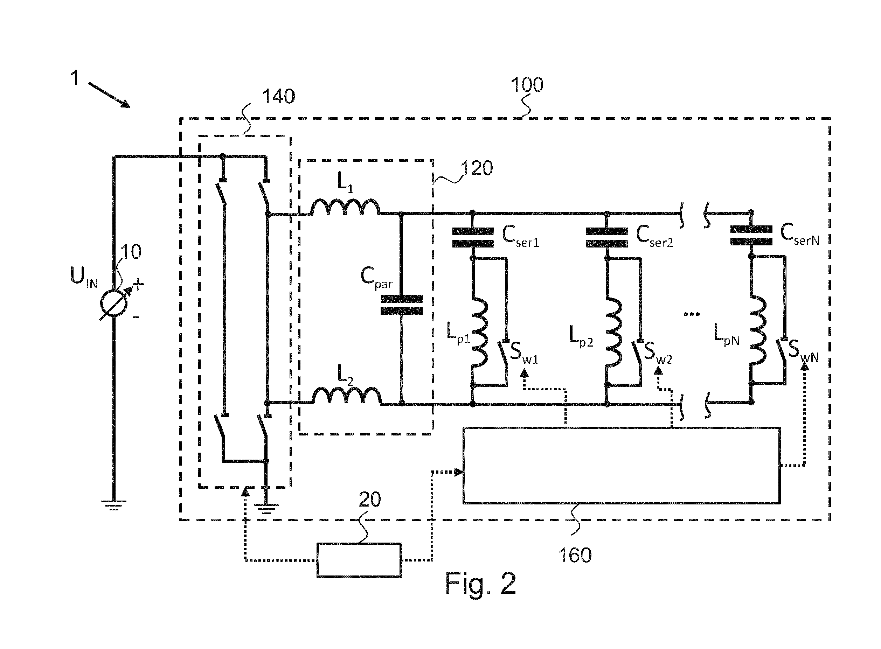

Fig. 2 shows a schematic diagram of a wireless power charger according to an exemplary embodiment of the present invention.

In Fig. 2, the power conversion module 100 comprises N primary coils Lₚ₁, Lₚ₂, ..., L_{pN}, and N power switches S_{w1}, S_{w2}, ..., S_{wN} in contrast to the setup with three primary coils and with three power switches as shown in Fig. 1.

The further reference signs as shown in Fig. 2 are already described in the description of Fig. 1 and are therefore not discussed any further.

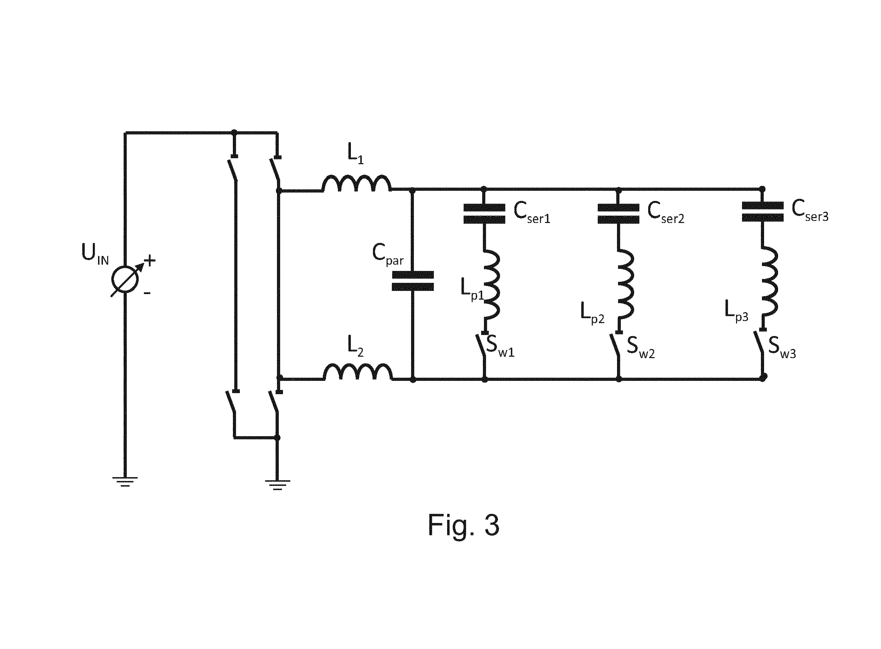

Fig. 3 shows a schematic diagram of a wireless power charger for explaining the present invention.

The wireless power charger as shown in Fig. 3 comprises a multiplexer with electronic power switches connected in series with each primary coil.

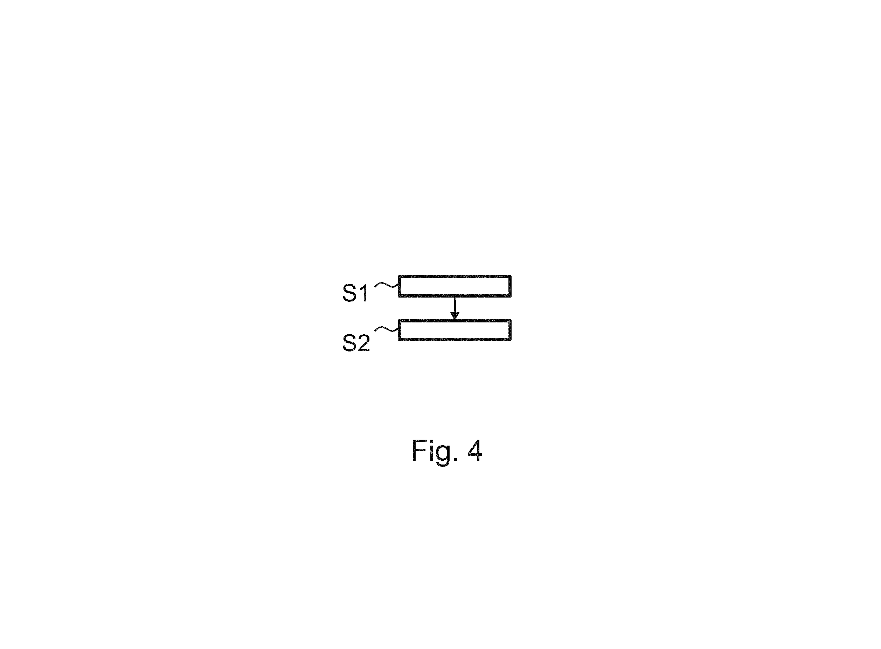

Fig. 4 shows a schematic diagram of a flow-chart diagram of a method for operating a power conversion module according to an exemplary embodiment of the present invention.

The method for operating a power conversion module 100 comprises the following steps of:

As a first step of the method, activating S1 a primary coil Lₚ₁, Lₚ₂, ..., L_{pN} by an open switch state of a power switch S_{w1}, S_{w2}, ..., S_{wN} which is coupled to the primary coil Lₚ₁, Lₚ₂, ..., L_{pN} in parallel may be performed.

As a second step of the method, deactivating S2 the primary coil Lₚ₁, Lₚ₂, ..., L_{pN} by a closed switch state of the power switch S_{w1}, S_{w2}, ..., S_{wN} may be performed.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

Many alternatives, modifications, and variations will be apparent to those skilled in the art in light of the above teachings. Of course, those skilled in the art readily recognize that there are numerous applications of the invention beyond those described herein.

While the present invention has been described with reference to one or more particular embodiments, those skilled in the art recognize that many changes may be made thereto without departing from the scope of the present invention.

It is therefore to be understood that within the scope of the appended claims and their equivalents, the inventions may be practiced otherwise than as specifically described herein.

In the claims, the word "comprising" does not exclude other elements or steps, and the indefinite article "a" or "an" does not exclude a plurality. A single processor or other unit may fulfill the functions of several items recited in the claims.

The mere fact that certain measures are recited in mutually different dependent claims does not indicate that a combination of these measured cannot be used to advantage.

A computer program may be stored or distributed on a suitable medium, such as an optical storage medium or a solid-state medium supplied together with or as part of other hardware, but may also be distributed in other forms, such as via the Internet or other wired or wireless telecommunication systems.

## Claims

1. A power conversion module (100) for inductive charging for vehicles, the power conversion module (100) comprising:
- a primary coil (Lₚ₁; Lₚ₂; ...; L_{pN}), which is configured to convert electrical energy into magnetic energy; and
- a power switch (S_{w1}; S_{w2}; ...; S_{wN}), which is coupled to the primary coil (Lₚ₁; Lₚ₂; ...; L_{pN}) in parallel and which is configured to activate the primary coil (Lₚ₁; Lₚ₂; ...; L_{pN}) by an open switch state and to deactivate the primary coil (Lₚ₁; Lₚ₂; ...; L_{pN}) by a closed switch state.

2. Power conversion module (100) according to claim 1, wherein the power conversion module (100) comprises:
- at least one further primary coil (Lₚ₂, ..., L_{pN}), which is configured to convert electrical energy into magnetic energy; and
- at least one further power switch (S_{w2}, ..., S_{wN}), which is coupled to the at least one further primary coil (Lₚ₂, ..., , L_{pN}) in parallel and which is configured to activate the at least one further primary coil (Lₚ₂, ..., , L_{pN}) by an open switch state and to deactivate the at least one further primary coil (Lₚ₂, ..., L_{pN}) by a closed switch state.

3. Power conversion module (100) according to claim 2, wherein the power conversion module (100) comprises a multiplexer (160) which is configured to control the power switch (S_{w1}; S_{w2}; ...; S_{wN}) and/or to control the at least one further power switch (S_{w2}, ..., S_{wN}) and which is configured to serve as a selection circuit for selecting the primary coil (Lₚ₁; Lₚ₂; ...; L_{pN}) and/or the at least one further primary coil (Lₚ₂, ..., L_{pN}) for wireless energy transmission.

4. Power conversion module (100) according to claim 2 or claim 3,
wherein the power conversion module (100) comprises an array of primary coils (Lₚ₁, Lₚ₂, ..., L_{pN}), the array comprising the primary coil (Lₚ₁; Lₚ₂; ...; L_{pN}) and the at least one further primary coil (Lₚ₂, ..., L_{pN}).

5. Power conversion module (100) according to one of the preceding claims,
wherein the power conversion module (100) comprises a EMC-filter circuit (120) comprising a capacitor (Cₚₐᵣ) and at least one inductor (L₁, L₂).

6. Power conversion module (100) according to claim 5, wherein the power conversion module (100) comprises a filter capacitor (Cₛₑᵣ₁; Cₛₑᵣ₂; ...; C_{serN}) which is coupled in series to the primary coil (Lₚ₁; Lₚ₂; ...; L_{pN}) or in series to the at least one further primary coil (Lₚ₂, ..., , L_{pN}) and which is assigned to the power switch (S_{w1}; S_{w2}; ...; S_{wN}) or to the least one further power switch (S_{w2}, ..., S_{wN}) and which is coupled in parallel to the capacitor (Cₚₐᵣ) of the EMC-filter circuit (120) if the power switch (S_{w1}; S_{w2}; ...; S_{wN}) or the least one further power switch (S_{w2}, ..., S_{wN}) assigned to the filter capacitor (Cₛₑᵣ₁, Cₛₑᵣ₂, ..., C_{serN}) is in closed switch state.

7. Power conversion module (100) according to one of the preceding claims,
wherein the power conversion module (100) comprises a power inverter circuit (140), which is configured to convert an input voltage (U_{IN}) into a supply voltage (U_{OUT}).

8. Power conversion module (100) according to one of the preceding claims,
wherein the power switch (S_{w1}, S_{w2}, .... S_{wN}) or the least one further power switch (S_{w2}, ..., S_{wN}) is a metal-oxide-semiconductor field-effect transistor.

9. Power conversion module (100) according to claim 8, wherein the metal-oxide-semiconductor field-effect transistor is a depletion-mode metal-oxide-semiconductor field-effect transistor.

10. A wireless power charger (1) comprising a voltage source (10) which is configured to provide an input voltage (U_{IN}), a control module (20) and a power conversion module (100) according to one of the preceding claims.

11. Method for operating a power conversion module (100), the method comprising the steps of:
- Activating (S1) a primary coil (Lₚ₁, Lₚ₂, ..., L_{pN}) by an open switch state of a power switch (S_{w1}, S_{w2}, ..., S_{wN}), which is coupled to the primary coil (Lₚ₁, Lₚ₂, ..., L_{pN}) in parallel; and
- Deactivating (S2) the primary coil (Lₚ₁, Lₚ₂, ..., L_{pN}) by a closed switch state of the power switch (S_{w1}, S_{w2}, ..., S_{wN}).

12. A computer program configured to operate a method according to the preceding claim 11 when executed on a computer.
